# EUROPEAN PATENT SPECIFICATION

(11) **EP 0 505 767 B1**
(45) Date of publication and mention of the grant of the patent: **03.06.1998**
(21) Application number: 92103583.8
(22) Date of filing: 02.03.1992
(51) Int. Cl.: B60R 25/00, B60R 25/08

(54) **Device for locking a hydraulic or pneumatic circuit of a vehicle, such as a braking circuit or the like**
Vorrichtung zum Blockieren eines Hydraulik- oder Druckluftkreises eines Fahrzeuges, insbesondere Bremskreises oder dergleichen
Dispositif pour bloquer un circuit hydraulique ou pneumatique d'un véhicule, en particulier circuit de frein ou similaire

(30) Priority: 21.10.1991 IT MI910915; 28.03.1991 IT MI910849
(43) Date of publication of application: 30.09.1992
(73) Proprietor: Meck Lock System S.A., 2450 Luxembourg (LU)
(72) Inventor: Cicchetti, Federico, I-65016 Montesilvano Spiaggia, Pescara (IT); Ferrari, Lorenzo, I-25015 Desenzano del Garda, Brescia (IT)
(74) Representative: Luksch, Giorgio, Dr.-Ing.

(56) References cited:
- EP-A- 0 313 694
- EP-A- 0 345 198
- WO-A-85/04630
- US-A- 1 746 435
- US-A- 2 881 789
- US-A- 3 362 426
- US-A- 3 557 584

## Description

This invention relates to a device according to the preamble of the main claim.

With reference to antitheft devices acting on the vehicle braking circuit, their shut-off means can generally assume two working positions, in one of which they interrupt the connection between the ducts to prevent the use of the vehicle brakes (generally after the braking circuit has been pressurized with consequent locking of the brakes) and hence of the vehicle itself, and in the other of which they free this connection to allow the vehicle brakes to be used.

Various forms of this type on antitheft device are known, but they have various drawbacks.

EP-0345198 A1 relates to an anti-theft valve for fuel feed pipe comprising a casing wherein a ball-valve is located; to the casing two opposite fuel feed pipes are connected. The ball-valve has a through hole which, depending on its position inside the casing, allows or interrupts the passage of the fuel through the casing and therefore through said pipes. The valve is key-operated through an opening of the casing.

EP-0313694 A1 relates to a hydraulic or pneumatic pipeline control arrengement in a vehicle or other machinery suitable for being used as an anti-theft device. This prior art discloses a device having a block comprising first and second fluid passageway which lead from a common input and subsequently connect to a common output. The first passageway is provided with a shut-off valve in the form of an elongated movable body which is capable of selectively opening or closing said first duct; the second passageway is provied with a one-way valve which allows fluid flow through said second duct in one direction only such that, when the shut-off valve is closed, application of hydraulic or pneumatic pressure via the second passageway is possible, but release of hydraulic or pneumatic pressure is prevented. The movable body is reciprocable in a corresponding bore under the influence of a solenoid, to the bore being connected the first passageway constituted by offset ducts leading from said bore. The second passageway is constituted by a by-pass channel directing connecting the offset ducts; the valve located in said second passageway comprises a spring-loaded element which is urged away from its seat by fluid pressure in one direction of flow and in contact whith its seat by fluid pressure in the opposite direction.

In this respect, these known types are generally of complicated and costly construction and are often unable to withstand the high pressure which arises in the braking circuit when it is locked in the aforesaid manner (ie after completely pressing the brake pedal of a vehicle incorporating the antitheft device),

As a result of this latter drawback, it may happen that the antitheft device is no longer able to properly act on the vehicle braking circuit when required or, much more seriously, that the antitheft device, now damaged, operates accidentally on this circuit during vehicle running, with the result that the brakes lock or become impossible to use.

In addition to this there is the problem with known antitheft devices that those braking circuits which have been locked in a state of pressure by such devices for several hours remain at least partially under pressure even after the antitheft device is switched off. This obviously prevents correct use of the brakes of the vehicle on which such devices are installed and puts the vehicle driver and passengers at considerable risk.

In addition, a device of the described type also comprises a part acting on the usual electrical ignition circuit of the vehicle in which it is installed.

Frequently however, because of banal electrical problems that part acting on the ignition circuit does not allow the vehicle to be started (following a period in which the antitheft device has operated and has then been switched off), even though the brakes have been released.

This makes it impossible to use the vehicle.

An object of the present invention is to provide an antitheft device of the stated type which is of simple and low cost construction. This is achieved by a device according to claim 1

A further object is to provide a device of the stated type which is able to withstand pressures arising in its connected braking circuit which are very high, and well above the usual pressures present during the use of the vehicle (ie 100-150 atmospheres).

A further object is to provide a device of the stated type which allows the vehicle to be started even if a fault develops in the electrical part connected to the vehicle ignition circuit.

A further object is to provide a device of the stated type which enables the pressure in the braking circuit to be a least partly released, down to a safety value, whenever the antitheft device is switched on after the vehicle brakes have been pressed and remains activated for a large number of hours (corresponding for example to 4-5 days).

A further object is to provide an antitheft device which can be easily installed on the vehicle and is of high reliability in use.

A further object is to provide a device of the stated type which can be used in a usual multi-way hydraulic or pneumatic system, which is of simple construction and of reliable use.

These and further objects which will be apparent to the expert of the art are attained by a device according the claims.

The present invention will be more apparent from the accompanying drawing, which is provided by way of non-limiting example and in which:
Figure 1 is a partly sectional side view of the antitheft device constructed in accordance with the invention;
Figure 2 is a section on the line 2-2 of Figure 1;
Figure 3 is a section on the line 3-3 of Figure 1;
Figure 4 is a partial enlarged view of part of the device of Figure 1;
Figure 5 is a schematic view of that part of the antitheft device connected to the vehicle electrical circuit and that part of the device of Figure 1 connected to said part;
Figure 6 is a partly sectional side view of a modified embodiment of the antitheft device according to the invention;
Figure 7 is a section on the line 7-7 of Figure 6; and
Figure 8 is a section on the line 8-8 of Figure 6.

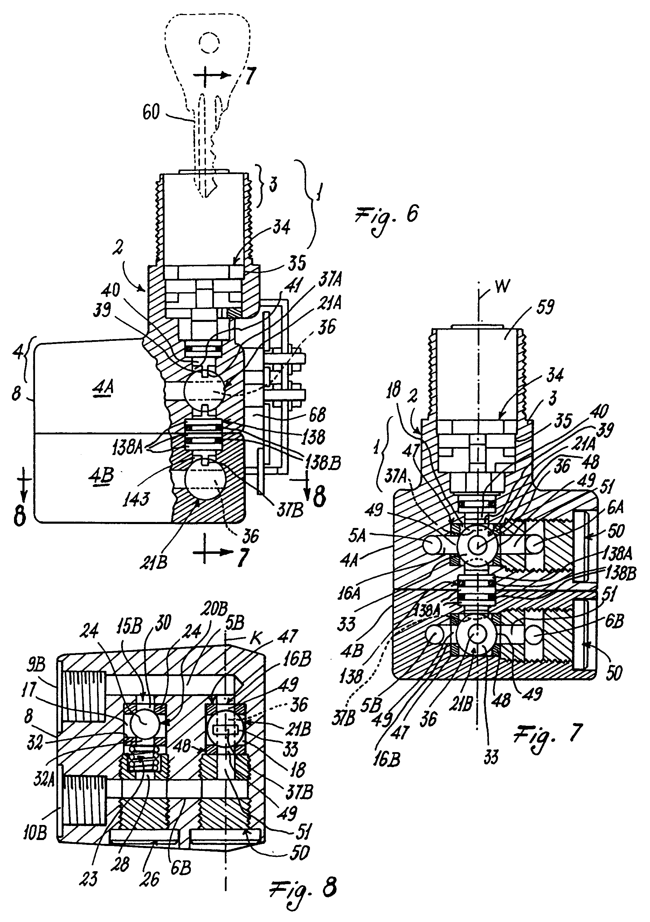

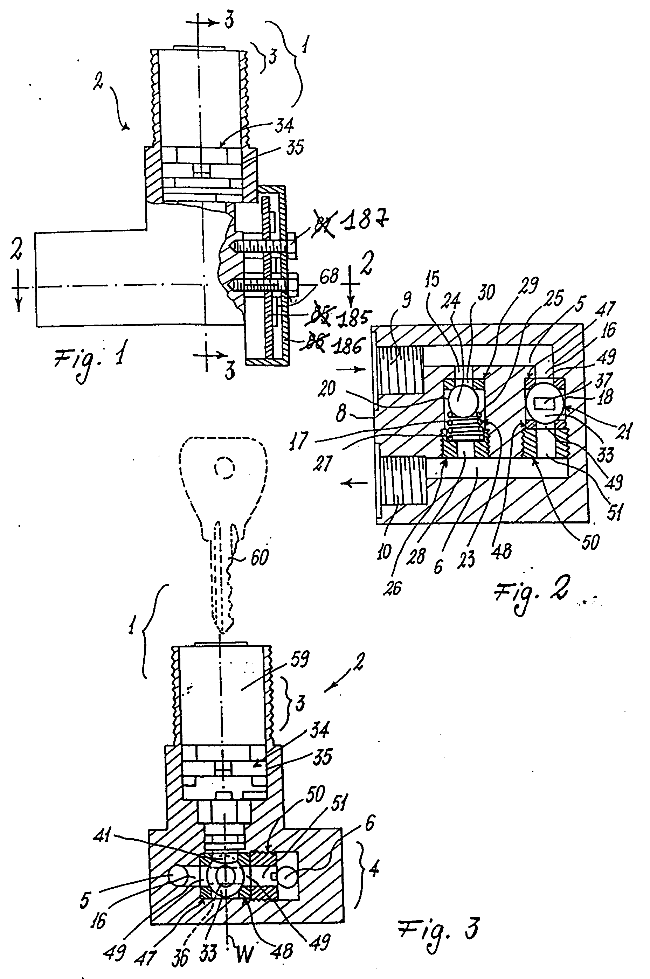

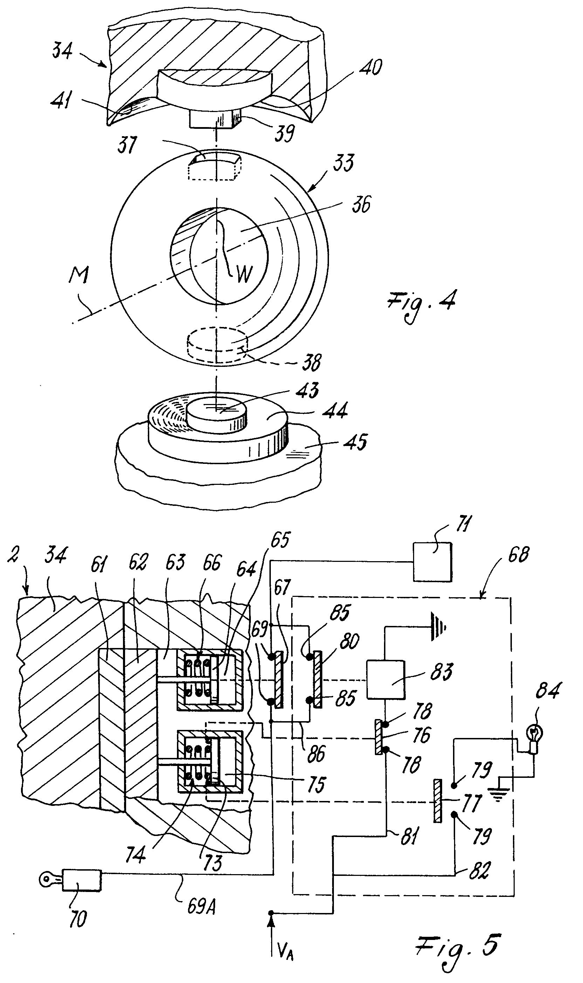

With reference to Figures 1 to 5, the antitheft device is indicated overall by 1 and comprises an advantageously one-piece block 2 consisting of two portions 3 and 4, one substantially superposed on the other.

The portion 4 or base comprises two ducts 5 and 6 parallel to each other. Both open to the outside of the block 2 at a face 8 of the portion 4, via threaded apertures 9 and 10 respectively. They are arranged to receive usual connectors associated with pipes (not shown) of the braking circuit of a vehicle on which the device 1 is installed.

Specifically, the aperture 9 is connected to the entry pipe for the hydraulic brake fluid and the aperture 10 is connected to the pipe by which this fluid is delivered to the vehicle brakes.

The ducts 5 and 6 are interconnected by channels 15 and 16. In these latter there are two seats 17 and 18 for receiving respectively a unidirectional valve 20, advantageously of decompression type, and shut-off means 21 for the fluid passing from the duct 5 to the duct 6.

The valve 20 comprises a ball 24 subjected to a spring 23, this latter resting on the ball via one end 25 and on a collar 26 via its other end 27, said collar being screwed into said seat 17 in proximity to the duct 6.

The collar 26 acts as the spring thrusting member and is provided with a through hole 28. Finally, the ball 24 cooperates with a seal member 29 and positioned in proximity to the duct 5.

The valve 20 acts as a by-pass valve.

As stated, the seat 18 holds the shut-off means 21.

These latter comprise a member in the form of a solid of revolution able to rotate about that axis W perpendicular to the axis K of the channel 16, this rotation being achieved by an actuator element 34 contained in a cavity 35 of the portion 3 of the block 2.

In particular, the member 33 is in the form of a sphere and is provided with a through hole 36 which in the example has its axis M perpendicular to said axis W.

This sphere has two opposing seats 37 and 38 formed with their axes coinciding with the axis W and consequently perpendicular to said axis M.

The seat 37 is arranged to cooperate with a corresponding pin 39 projecting from a part 40 associated with one end 41 of the actuator element 34, said end being concave so as to engage the spherical surface of the member 33 in proximity to the seat 37.

The seat 38 is arranged to cooperate with a corresponding pin 43 rising from a concave part 44 projecting from the base 45 of the seat 18.

The pins 39 and 43, of which the pin 39 is advantageously of polygonal cross-section, guide the rotation of the member 33 about its axis W.

The member or sphere 33 also cooperates with two seal elements 47 and 48 each provided with a through hole 49. The element 48 also cooperates with a threaded element 50 provided with a through hole 51 and clamping said elements 47 and 48 and the sphere 33 in the seat 18.

Said holes 49 and 50 are coaxial with the channel 16. Apart from the shape of that end 41 cooperating with the sphere 33, the actuator element 34 is of known type and is inserted into the cavity 35 in any known manner. It is arranged to cooperate with a usual member 59 for rotating the sphere 33 and hence for locking or releasing the antitheft device, said member 59 being advantageously of the type operated by a safety key 60.

According to a further characteristic of the invention the actuator element supports a permanent magnet 61 arranged to cooperate with a further movable magnet 62 suitably positioned within a seat 63 in the block 2.

This magnet cooperates with at least one member 64 movable within a seat 65 against a spring 66. A movable contactor 67 is associated mechanically, electrically on in another known manner with said movable member 64.

The contactor is arranged to cooperate with fixed contacts 69 provided in an electrical line 69A which connects the usual ignition block 70 of the vehicle to its starter motor 71.

In known manner, the actuator element 34 and the member 59 are connected to an electrical circuit 68 connected to the vehicle ignition circuit in order to start the vehicle following release of its brakes.

In one embodiment, with the magnet 62 there is associated a further member 73 movable against a spring 74 within a seat 75 provided in the block 2 and cooperating in any known manner with movable electrical contactors 76 and 77. These latter are arranged to cooperate with corresponding fixed contacts 78 and 79 provided in respective electrical lines 81 and 82 (connected to a supply voltage V_{A}) to feed a relay 83 (operating on a contactor 80 which closes across contacts 85 provided in an electrical line 86 in parallel with said contacts 69) and a lamp or other lighting member (such as a light emitting diode) 84.

The circuit 68 is supported by a plate 185 connected to the block 2 in known manner and is protected by a cap 186 fixed to said block by screws 187.

It will now be assumed that the described antitheft device is to be used.

It will be assumed that its components are in the position shown in the figures, which allows the vehicle on which the device is installed to operate.

To lock the vehicle, after it has stopped the usual brake pedal is pressed completely down and the key 60 is turned within the block 2.

In known manner this causes the member 59 and actuator element 34 to rotate.

By virtue of the cooperation between the pin 39 of this latter and the sphere 33, this latter rotates about its axis W.

This moves the hole 36, which was initially coaxial with the channel 16, into a position in which it no longer communicates therewith, for example with its axis M perpendicular to the axis K of said channel.

This makes it impossible for the pressurized brake fluid to return from the duct 6 to the duct 5 with the result that the pressure of the vehicle brakes cannot be released. These are therefore locked.

If the vehicle remains at rest with the device 1 activated for a large number of hours, for example for four or five days, the valve 20 releases the pressure of the vehicle braking circuit by causing the brake fluid to pass from the duct 6 to the duct 5 via the channel 15. This occurs after a predetermined number of hours, for example thirty-six, such that the components of said braking circuit are not negatively affected by the pressure applied to them, as instead can happen with known antitheft devices of the described type.

In any event, if the vehicle were to be stolen after this time period (ie with the braking circuit not activated), after initial braking its brakes would lock and the delivery pipe would again come under pressure.

In this respect, under braking, the brake fluid pressurized by the brake pedal passes from the duct 5 to the duct 6 via the channel 15 by withdrawing the ball 24 from the seal member 29 (the channel 16 being interrupted by the member 33). This allows the brakes to operate.

However, after this the pressurized fluid is unable to return to the duct 5 via the channel 15 as its pressure contributes to maintaining the ball 24 closed against the hole 30 of the member 29, ie closing the valve.

In this manner pressurized fluid remains in the duct 6 (and in the connected pipe of the braking circuit) and hence the vehicle brakes are again locked, as they were before the pressure was discharged via the valve 20.

On rotating the element 34 within the cavity 35 of the portion 3 of the block 2, the magnet 61 carried by it is displaced from the magnet 62. This latter then moves into the cavity 63 by the action of the member 64 subjected to the spring 66.

In this manner the movable contactor 67 withdraws from the contacts 69.

Analogously, with the movement of the magnet 62 the contactor 76 opens its contacts 78 and the contactor 77 closes its contacts 79.

The lamp 84 is hence lit to indicate that the antitheft device is active and the contactor 80 operated by the relay 83, no longer fed, is open.

In this manner "separation" occurs between the block 70 and the starter motor 71.

The vehicle is hence locked in an unstartable state.

To release it the opposite procedure is implemented, to rotate the sphere 33 within its seat about the axis W, resulting in the hole 36 aligning with the channel 16, the closure of the contacts 67 and 76 and the opening of the contact 77 by the movement of the magnet 62 within the seat 63 resulting from the attraction of the magnet 61 which has returned into the position of Figure 5.

It should be noted that with the antitheft device switched off, the fluid in the channel 16 passes through the hole 36 without encountering any movable element. With this situation the path of the hydraulic fluid is totally free of any member which, if malfunctioning, could interrupt the path.

With the described embodiment, if a fault occurs in the circuit 68 the vehicle can still be started by the closure of the contactor 67 in the electrical line 69A connecting the block 70 to the motor 71.

If the electrical circuit 68 should malfunction for any electrical fault (much more probable than a mechanical fault within the block 2), this would be indicated by the lamp or light emitting diode 84 not extinguishing.

This provides automatic indication of proper operation of the circuit 68.

A possible further diode (not shown) could indicate this situation.

In this respect, the circuit 68 could also be very complicated and comprise ultrasound, microwave or other sensors commonly known in the vehicle antitheft field.

Figures 6 to 8 show a modified embodiment of the invention. In these figures, parts corresponding to those of Figures 1 to 5 are indicated by the same reference numerals.

With reference to Figures 6 to 8, the antitheft device 1 comprises the block 2 in which the portion 4 is divided substantially into two parts 4A and 4B comprising two pairs of ducts 5A, 6A and 5B, 6B lying parallel to each other. All the ducts open to the outside of the block 2 at the face 8 of the portion 4 via threaded apertures 9A, 9B and 10A, 10B respectively (only the apertures 9B and 10B are shown). These receive usual connectors associated with pipes (not shown) of a braking circuit (or the like) of a vehicle on which the device 1 is installed, said circuit comprising connections towards the front wheels of the circuit separate from those towards the rear wheels.

Specifically, the apertures 9A, 9B are connected to entry pipes for the hydraulic brake fluid, and the apertures 10A, 10B are connected to the pipes delivering this fluid to the vehicle brakes.

The ducts 5A, 5B and 6A, 6B are interconnected by channels 15A, 15B and 16A, 16B. In these latter there are provided two seats 17A, 17B and 18A, 18B each arranged to receive respectively a unidirectional valve 20A, 20B, advantageously of decompression type, and shut-off means 21A, 21B for the fluid passing from the ducts 5A, 5B to the ducts 6A, 6B respectively.

Each valve 20A, 20B comprises the said ball 24 subjected to the action of the spring 23, acting on a ring 32 of material offering a seal towards fluids (such as teflon). The spring 23 cooperates with the ball via the collar 26, provided with the through hole 28 coaxial with a through hole 32A in the ring 32.

The shut-off means 21A, 21B comprise the member 33 in the form of a solid of revolution able to rotate about that axis W perpendicular to the axis K of the channel 16, this rotation being achieved by the actuator element 34.

In particular, the sphere of the shut-off means 21A (or first sphere) comprises a seat 37A formed with its axis coincident with the axis W. Opposite said seat along the same axis, said sphere supports a pin 138 arranged to cooperate with a seat 37B of the sphere of the means 21B (or second sphere). The pin 138 comprises collars 138A between which seal members 138B are positioned.

The seat 37A is arranged to cooperate with the pin 39 associated with the actuator element 34, the end 41 of this latter being concave so as to engage the spherical surface of the corresponding member 33. One end 143 of the pin 138 has an analogous concave form to cooperate with the spherical surface of the sphere 33 of the shut-off means 21B.

The pins 38 and 39, both preferably of polygonal cross-section, guide the rotation of the members 33 of the shut-off means 21A, 21B about their axis W.

Each member or sphere 33 also cooperates with corresponding seal elements 47 and 48 each provided with a through hole 49 (as already described in relation to Figures 1 to 5).

The block 2 is also connected to the electrical circuit 68 which, as stated in relation to Figures 1 to 5, is connected to the vehicle ignition circuit in order to start the vehicle following release of its brakes.

It will now be assumed that the device of Figures 6 to 8 is to be used and that its components are in the position shown in Figure 3, which allows the vehicle on which the device is installed to operate.

To lock the vehicle, after it has stopped, the usual brake pedal is pressed completely down and the key 60 is turned within the block 2.

In known manner this causes the member 59 and actuator element 34 to rotate.

By virtue of the cooperation between the pin 39 of this latter and the sphere 33 of the means 21A, this sphere rotates about its axis W. Consequently, the sphere 33 of the means 21B also rotates about the same axis.

This moves the holes 36, which were initially coaxial with the channels 16A, 16B, into a position in which they no longer communicate with these latter (as in Figure 7).

This makes it impossible for the pressurized brake fluid to return from the duct 6A, 6B to the ducts 5A, 5B with the result that the pressure of the vehicle brakes cannot be released. These are therefore locked.

If the vehicle remains at rest with the device 1 activated for a large number of hours, for example for four or five days, the valves 20 release the pressure of the vehicle braking circuit, as already stated, by causing the brake fluid to pass from the ducts 6A, 6B to the ducts 5A, 5B via the channels 15A, 15B.

In known manner, the rotation of the member 59 causes the activation of the circuit 68, to prevent vehicle starting.

The vehicle is hence locked in an unstartable state.

To release it the opposite procedure is implemented, to rotate the spheres 33 within their seats 18A, 18B about the axis W, resulting in their hole 36 aligning with the channels 16A, 16B.

The device is of simple construction, safe application and reliable use on a vehicle.

It should be noted that the member 33 can have the shape of other solids of revolution (ellipsoid, paraboloid or the like).

## Claims

1. A device for locking a vehicle hydraulic or pneumatic braking circuit, to act in particular as an antitheft device, of the type comprising a block (2) containing ducts (5,6;5A,6A;5B,6B) interconnected by at least a first communication channel (15;15a;15b) and a second communication channel (16;16A;16B), said ducts opening to the outside of said block (2) for connection to a brake fluid entry pipe and to a pipe for delivering this fluid to a vehicle brake, the connection between said ducts (5,6;5A,6A;5b,6B) through the first channel (16;16A,16B) being closable by shut-off means (21,21A,21B) located within said channel, said shut-off means (21,21A,21B) assuming two working positions in only one of which said ducts (5,6;5A,6A;5B,6B) are connected through said first channel (16;16A,16B), in the second communication channel (15,15A,15B) being located an unidirectional valve (20), the latter maintaining, when the first channel (16,16A,16B) is closed by the shut-off means (21,21A,21B), a connection between said ducts (5,6;5A,6A;5B,6B) so as to permit to apply the vehicle brakes but preventing the immediate release of such brakes, characterized in that said shut-off means (21,21A,21B) are spherical shaped and provided with a through hole (36) having an axis (M) perpendicular to an axis (W) about which the shut-off means can rotate operated by key-operated actuator means (59) so as to assume its two working positions, and in that the unidirectional valve (20) is of the decompression type, said valve releases the brakes after a predetermined period of time from their application through a release of the braking pressure brought about by the decompression valve (20) itself.

2. A device as claimed in claim 1, characterized by being associated with an electrical circuit (68) arranged to prevent the starting of the vehicle when the device (1) is activated and acting on the usual electrical connection line (68A) between the known block (70) and the vehicle starter motor (71).

3. A device as claimed in claim 2, characterized by comprising safety means (62,64,67) which enable the vehicle to be started even if faults are present in the electrical circuit (68) connected to the block (2).

4. A device as claimed in claim 3, characterized in that the safety means are a permanent magnet (62) movable within a seat (63) in the block (2) and operationally connected to a movable contactor (67) arranged to cooperate with fixed contacts (69) provided in the connection line (69A) between the block (70) and the starter motor (71), said magnet cooperating with a further magnet suitably associated with the actuator means (34) for moving the shut-off means (21,21A,21B), said fixed contacts (69) being connected in parallel with further contacts (85) arranged to cooperate with a movable contactor (80) operated by a relay (83) of the electrical circuit (68) associated with the block (2), said relay being energized following the release of the brakes achieved by operating on said block (2).

5. A device as claimed in claim 2, characterized in that the electrical circuit (68) associated with the block (2) comprises at least one lighting member (84) operated by the movement of the actuator means (34) which moves the shut-off means (21,21A,21B).

6. A device as claimed in claim 1, comprising a block provided with at least two pairs of interconnected ducts opening to the outside of said block at apertures to which a vehicle hydraulic or pneumatic circuit is connected, in an interconnecting channel of a first pair of ducts there being located a shut-off means in the form of a solid of revolution rotating about an own axis following the operation of an actuator member operated by a key, characterized in that said shut-off means (21A) is torsionally connected to a second superimposed shut-off means (21B) in the form of a solid of revolution located in the interconnecting channel (16B) of the other pair of ducts (15B, 16B), transmission members (138) for the rotary movement of the first shut-off means (21A) being provided for transferring this movement to the second shut-off means (21B).

7. A device as claimed in claim 6, characterized in that the rotary movement transmission member is a pin (138) cooperating with the first solid of revolution (33) and rigid therewith, said pin (138) being associated with a seat (37B) in the solid of revolution defining the second shut-off means (21B).

## Patentansprüche

1. Vorrichtung zum Sperren eines hydraulischen oder pneumatischen Fahrzeug-Bremskreislaufs, um insbesondere als eine Diebstahlsicherungseinrichtung zu wirken, des Typs mit einem Block (2), der Rohrleitungen (5, 6; 5A, 6A; 5B, 6B) hat, dich durch zumindest einen ersten Verbindungskanal (15; 15a; 15b) und einen zweiten Verbindungskanal (16; 16A; 16B) miteinander verbunden sind, wobei die Rohrleitungen zur Außenseite des Blocks (2) offen sind, um eine Bremsflüssigkeitszufuhrleitung und eine Leitung anzuschließen, um diese Flüssigkeit zu einer Fahrzeugbremse zu leiten, wobei die Verbindung zwischen den Rohrleitungen (5, 6; 5A, 6A; 5B, 6B) durch den ersten Kanal (16; 16A, 16B) mit Hilfe von in dem Kanal angeordneten Sperreinrichtungen (21, 21A, 21B) verschließbar ist, wobei die Sperreinrichtungen (21, 21A, 21B) zwei Betriebspositionen einnehmen können, wobei in nur einer davon die Rohrleitungen (5, 6; 5A, 6A; 5B, 6B) über den ersten Kanal (16; 16A, 16B) verbunden sind, wobei in dem zweiten Verbindungskanal (15, 15A, 15B) ein in eine Richtung wirkendes Ventil (20) angeordnet ist, wobei das letztere, wenn der erste Kanal (16, 16A, 16B) mittels der Sperreinrichtungen (21, 21A, 21B) geschlossen ist, eine Verbindung zwischen den Rohrleitungen (5, 6; 5A, 6A; 5B, 6B) aufrechterhält, um es zu ermöglichen, die Fahrzeugbremsen zu betätigen, aber die sofortige Freigabe dieser Bremsen verhindert, dadurch gekennzeichnet, daß die Sperreinrichtungen (21, 21A, 21B) sphärisch geformt und mit einer Durchlaßöffnung (36) versehen sind, die eine Achse (M) hat, die senkrecht zu einer Achse (W) verläuft, um die die Sperreinrichtungen bei Betätigung mittels einer mit einen Schlüssel zu betätigenden Betätigungseinrichtung (59) drehbar ist, um so die beiden Betriebspositionen davon einzunehmen, und daß das in eine Richtung wirkende Ventil (20) vom Dekompressionstyp ist, wobei das Ventil nach einer vorbestimmte Zeitdauer ab Betätigung davon durch einen Abfall des Bremsendrucks, der durch das Dekompressionsventil (20) selbst herbeigeführt wird, die Bremsen freigibt.

2. Vorrichtung nach Anspruch 1, gekennzeichnet durch Kopplung mit einer elektrischen Schaltung (68), die dazu ausgestaltet ist, das Starten des Fahrzeugs zu verhindern, wenn die Vorrichtung (1) aktiviert ist, und auf die übliche elektrische Verbindungsleitung (68A) zwischen dem bekannten Schloß (70) und dem Fahrzeug-Anlaßermotor (71) zu wirken.

3. Vorrichtung nach Anspruch 2, gekennzeichnet durch Sicherheitseinrichtungen (62, 64, 67), die es ermöglichen, das Fahrzeug auch dann zu starten, wenn in dem mit dem Block (2) verbundenen elektrischen Schaltkreis (68) Fehler vorliegen.

4. Vorrichtung nach Anspruch 3, dadurch gekennzeichnet, daß die Sicherheitseinrichtungen einen Permanentmagnet (62) haben, der in einer Aufnahme (63) in dem Block (2) bewegbar und funktional mit einem bewegbaren Kontakt (67) verbunden ist, der dazu ausgestaltet ist, mit feststehenden Kontakten (69) zusammenzuwirken, die in der Verbindungsleitung (69A) zwischen dem Schloß (70) und dem Anlaßermotor (71) vorgesehen sind, wobei der Magnet mit einem weiteren Magnet zusammenwirkt, der geeignet mit der Betätigungseinrichtung (34) zum Bewegen der Sperreinrichtungen (21, 21A, 21B) in Beziehung steht, wobei die feststehenden Kontakte (69) parallel mit weiteren Kontakten (85) verbunden sind, die dazu ausgestaltet sind, um mit einem bewegbaren Kontakt (80) zusammenzuwirken, der durch ein Relais (83) des mit dem Block (2) in Beziehung stehenden elektrischen Schaltkreises (68) betätigt wird, wobei das Relais nach Freigabe der Bremsen erregt wird, was durch Einwirkung auf den Block (2) erreicht wird.

5. Vorrichtung nach Anspruch 2, dadurch gekennzeichnet, daß der mit dem Block (2) in Beziehung stehende elektrische Schaltkreis (68) zumindest ein Leuchtmittel (84) ausweist, das durch die Bewegung der Betätigungseinrichtung (34) betrieben wird, durch die die Sperreinrichtungen (21, 21A, 21B) bewegt werden.

6. Vorrichtung nach Anspruch 1, die einen Block aufweist, der mit zumindest zwei Paaren von miteinander verbundenen Rohrleitungen versehen ist, die zur Außenseite des Blocks an Öffnungen offen sind, an denen ein hydraulischen der pneumatischer Kreislauf eines Fahrzeugs angeschlossen ist, wobei in einem Verbindungskanal von einem ersten Paar von Rohrleitungen eine Sperreinrichtung in Form eines Rotationskörpers angeordnet ist, der sich bei Betätigung eines durch einen Schlüssel zu betätigenden Betätigungsbauteils um eine eigene Achse dreht, dadurch gekennzeichnet, daß die Sperreinrichtung (21A) über eine Drehverbindung mit einer zweiten darunterliegenden Sperreinrichtung (21B) gekoppelt ist, die die Form eines Rotationskörpers hat, der in dem Verbindungskanal (16B) des anderen Paares von Rohrleitungen (15B, 16B) angeordnet ist, wobei Übertragungsbauteile (138) für die Drehbewegung der ersten Sperreinrichtung (21A) vorgesehen sind, um diese Bewegung auf die zweite Sperreinrichtung (21B) zu übertragen.

7. Vorrichtung nach Anspruch 6, dadurch gekennzeichnet, daß das Drehbewegung übertragende Bauteil ein Stift (138) ist, der mit dem ersten Rotationskörper (33) zusammenwirkt und damit starr ist, wobei der Stift mit einem Sitz (37B) in dem Rotationskörper in Beziehung steht, durch den die zweite Sperreinrichtung (21B) gebildet ist.

## Revendications

1. Dispositif de verrouillage d'un circuit de freinage hydraulique ou pneumatique de véhicule, ayant notamment une fonction d'antivol, du type comprenant un bloc (2) contenant des conduits (5, 6 ; 5A, 6A ; 5B, 6B) reliés par au moins un premier canal de liaison (15 ; 15A ; 15B) et un second canal de liaison (16 ; 16A ; 16B), lesdits conduits débouchant sur l'extérieur dudit bloc (2) pour être raccordés à une tubulure d'admission de liquide de frein et à une tubulure délivrant ledit liquide à un frein de véhicule, la liaison entra lesdits conduits (5, 6 ; 5A, 6A ; 5B, 6B) par le premier canal (16; 16A, 16B) pouvant être obturée par un moyen d'arrêt (21, 21A, 21B) agencé à l'intérieur dudit canal et susceptible de prendre deux positions de travail, dont une seule dans laquelle lesdits conduits (5, 6 ; 5A, 6A ; 5B, 6B) sont reliés par ledit premier canal (16 ; 16A, 16B), une valve unidirectionnelle (20) étant agencée dans le second canal de liaison (15, 15A, 15B) pour maintenir la communication entre lesdits conduits (5, 6 ; 5A, 6A ; 5B, 6B) lorsque le premier canal (16 ; 16A, 16B) est fermé par le moyen d'arrêt (21, 21A, 21B), afin de permettre l'actionnement des freins du véhicule tout en empêchant le relâchement immédiat de ces derniers, caractérisé en ce que ledit moyen d'arrêt (21, 21A, 21B) est de forme sphérique et doté d'un trou traversant (36) dont l'axe (M) est perpendiculaire à un axe de rotation (W) dudit moyen d'arrêt, lequel est asservi à un dispositif d'actionnement à clé (59) l'orientant dans l'une de ses deux positions de travail, et en se que la valve unidirectionnelle (20) est du type à décompression, ladite valve relâchant les freins après un laps de temps prédéterminé suivant leur actionnement en libérant la pression de freinage qu'elle a elle-même générée.

2. Dispositif selon la revendication 1, caractérisé en ce qu'il est associé à un circuit électrique (68) conçu pour empêcher le démarrage du véhicule lorsque le dispositif (1) est activé et agissant sur le conducteur de raccordement électrique usuel (68A) relient le bloc connu (70) au démarreur (71) du véhicule.

3. Dispositif selon la revendication 2, caractérisé en ce qu'il comprend un dispositif de sécurité (62, 64, 67) qui autorise le démarrage du véhicule même en présence de dysfonctionnements dans le circuit électrique (68) raccordé au bloc (2).

4. Dispositif selon la revendication 3, caractérisé en ce que le dispositif de sécurité consiste en un aimant permanent (62) mobile à l'intérieur d'un logement (63) prévu dans le bloc (2), et relié en fonctionnement à un contact mobile (67) agencé pour coopérer avec des contacts fixes (69) prévus sur le conducteur de raccordement (69A) entre le bloc (70) et le démarreur (71), ledit aimant coopérant avec un autre aimant judicieusement associé audit dispositif d'actionnement (34) pour déplacer le moyen d'arrêt (21, 21A, 21B), lesdits contacts fixes (69) étant montés en parallèle avec d'autres contacts (85) aptes à coopérer avec un contact mobile (80) asservi à un relais (83) d'un circuit électrique (68) associé au bloc (2), ledit relais étant excité en réponse au relâchement des freins commandé par l'actionnement dudit bloc (2).

5. Dispositif selon la revendication 2, caractérisé en ce que le circuit électrique (68) associé au bloc (2) comprend au moins un élément d'éclairage (84) asservi au mouvement du dispositif d'actionnement (34) du moyen d'arrêt (21, 21A, 21B).

6. Dispositif selon la revendication 1, caractérisé en ce qu'il comprend un bloc doté d'au moins deux paires de conduits interconnectés, débouchant à l'extérieur dudit bloc, au niveau d'ouvertures auxquelles est raccordé un circuit hydraulique ou pneumatique de véhicule, un moyen d'arrêt se trouvant dans un canal de liaison entre une première paire de conduits et affectant la forme d'un solide de révolution tournant autour de son propre axe en réponse à la commande d'un dispositif d'actionnement à clé, caractérisé en ce que ledit moyen d'arrêt (21A) est solidaire en rotation d'un second moyen d'arrêt superposé (21B) affectant la forme d'un solide de révolution agencé dans le canal de liaison (16B) de l'autre paire de conduits (15B, 16B), des organes de transmission (138) du mouvement rotatif du premier moyen d'arrêt (21A) étant prévus pour transmette ledit mouvement au second moyen d'arrêt (21B).

7. Dispositif selon la revendication 6, caractérisé en ce que l'organe de transmission du mouvement rotatif consiste en un axe (138) coopérant de manière rigide avec le premier solide de révolution (33), ledit axe (138) s'engageant dans un logement (37B) ménagé dans le solide de révolution constituant le second moyen d'arrêt (21B).
